# FASCICULE DE BREVET EUROPEEN

(11) **EP 3 063 087 B1**
(45) Date de publication et mention de la délivrance du brevet: **01.07.2020**
(21) Numéro de dépôt: 14790589.7
(22) Date de dépôt: 28.10.2014
(51) Int. Cl.: B67C 3/20, B65B 3/28, B65B 43/59

(54) **INSTALLATION DE REMPLISSAGE PONDERAL DE RECIPIENTS REPOSANT SUR UN CONVOYEUR**
ANLAGE ZUR GEWICHTSFÜLLUNG VON BEHÄLTERN AUF EINEM FÖRDERER
FACILITY FOR THE WEIGHT FILLING OF CONTAINERS RESTING ON A CONVEYOR

(30) Priorité: 30.10.2013 FR 1360628
(43) Date de publication de la demande: 07.09.2016
(73) Titulaire: Serac Group, 72400 La Ferté Bernard (FR)
(72) Inventeur: GRAFFIN, André, 60185 Chicago (US)
(74) Mandataire: Lavialle, Bruno François Stéphane
(86) Numéro de dépôt international: PCT/EP2014/073156
(87) Numéro de publication internationale: WO 2015/063110

(56) Documents cités:
- EP-A1- 2 433 900
- DE-B3-102009 011 949
- US-A- 5 400 837

## Description

La présente invention concerne un procédé et une installation de remplissage pondéral de récipients.

Il est connu des installations de traitement de récipients comportant par exemple un poste de décontamination de récipients, un poste de remplissage des récipients et un poste de bouchage des récipients. Les récipients sont transportés de poste en poste par un convoyeur sur lequel les récipients reposent par leur fond. Les convoyeurs les plus répandus sont les convoyeurs à bande ou tapis du fait de leur simplicité de mise en œuvre.

Le poste de remplissage comprend généralement des becs de distribution de produits commandés par un dispositif de dosage de produit agencé pour arrêter la distribution de produit lorsque le récipient a été remplie de la quantité souhaitée de produit. Les becs de distribution et les dispositifs de dosage sont généralement montés sur un transporteur pour se déplacer avec les récipients en cours de remplissage.

Il existe des dispositifs de dosage volumétrique et des dispositifs de dosage pondéral. Les premiers sont les plus couramment utilisés pour le remplissage de récipients supportés par un convoyeur car il ne nécessite pas d'intervention sur les récipients.

Au contraire, les dispositifs de dosage pondéral opèrent par pesage des récipients pendant le remplissage de ceux-ci. Il est alors nécessaire de prévoir des moyens de dérivation pour amener les récipients depuis le convoyeur vers des balances disposées sous les becs de distribution de telle manière que les récipients reposent par leur fond sur les balances pendant le remplissage. Ceci complique la structure de l'installation.

DE 10 2009 011 949 B3 divulgue une installation selon le préambule de la revendication 1.

Un but de l'invention est de fournir un moyen pour faciliter le remplissage pondéral de récipients reposant sur un convoyeur.

A cet effet, on prévoit, selon l'invention, une installation comprenant un convoyeur mobile linéairement sur lesquels les récipients sont destinés à reposer par leurs fonds et un support s'étendant au moins en partie au-dessus du convoyeur, le support portant au moins un bec de distribution s'étendant verticalement et un dispositif de pesage auquel est suspendu un guide vertical s'étendant au voisinage du bec de distribution, un organe de saisie de récipient étant monté sur le support pour présenter une embouchure d'un récipient à l'aplomb du bec de distribution et pour être mobile entre une position basse dans laquelle l'organe de saisie peut saisir un récipient reposant sur le convoyeur ou déposer le récipient saisi sur le convoyeur et une position haute dans laquelle le récipient est décollé du convoyeur et a son embouchure rapprochée du bec de distribution, et des moyens de commande de l'organe de saisie entre ses deux positions.

D'autres caractéristiques et avantages de l'invention ressortiront à la lecture de la description qui suit d'un mode de mise en œuvre particulier non limitatif de l'invention.

Il sera fait référence aux dessins annexés, parmi lesquels :
- la figure 1 est une vue frontale, en coupe transversale, de l'installation selon l'invention, avant saisie d'un récipient ;
- la figure 2 est une vue partielle, en perspective, de cette installation ;
- la figure 3 est une vue analogue à la figure 2, après saisie d'un récipient mais avant soulèvement de celui-ci ;
- la figure 4 est une vue frontale partielle de de l'installation, après soulèvement d'un récipient ;
- la figure 5 est une vue partielle, en perspective, de l'installation, après soulèvement du récipient ;
- la figure 6 est une vue partielle de côté de l'installation, après soulèvement du récipient ;

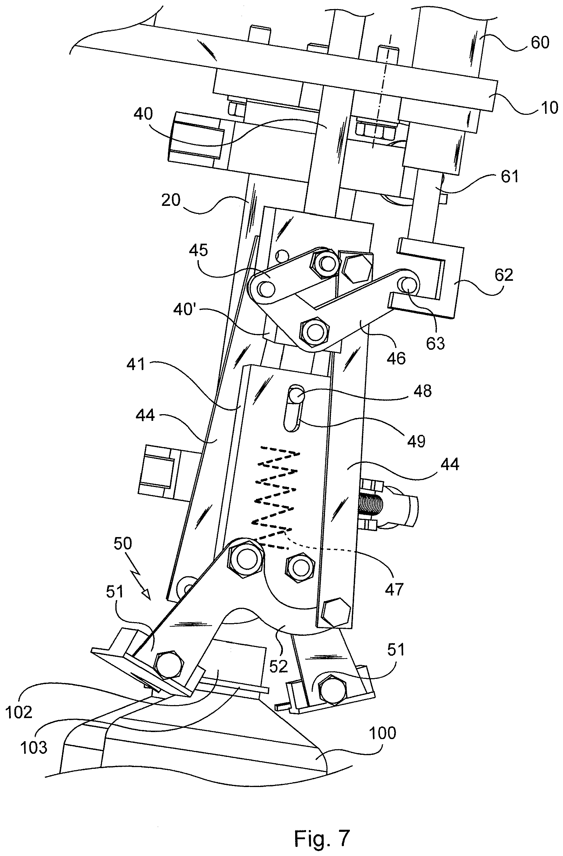

- la figure 7 est une vue partielle, en perspective, de l'installation, après que le récipient rempli a été déposé.

En référence aux figures, la description révèle un procédé de remplissage pondéral de récipients 100 ayant un corps sensiblement tubulaire possédant une extrémité fermée d'un fond 101 et à l'opposé une extrémité conformée en un goulot 102 pourvu d'une collerette 103. Les récipients 100 reposent par leurs fonds 101 sur un convoyeur. Par convoyeur, on entend un transporteur linéaire comportant par exemple une courroie, une bande ou un tapis qui s'étend selon une direction de déplacement des récipients et qui est animé d'un mouvement de défilement le long de cette direction pour déplacer les récipients le long de ladite direction.

Le procédé comprend les étapes de :
- saisir chaque récipient 100 pour le décoller du convoyeur sous un bec de distribution de produit ;
- peser le récipient alors qu'il est maintenu décollé du convoyeur sous le bec de distribution tout en le remplissant jusqu'à atteindre un poids souhaité ;
- reposer le récipient sur le convoyeur.

Ce procédé est mis en œuvre au moyen d'une installation de remplissage de récipients, comprenant un convoyeur 1 mobile linéairement sur lesquels les récipients 100 sont destinés à reposer par leurs fonds 101. Le convoyeur est ici un transporteur linéaire comportant une chaîne dont les maillons ont une surface supérieure plate apte à supporter le fond 101 des récipients 100. De manière connue en elle-même, la chaîne s'enroule autour d'au moins deux poulies, d'axes horizontaux, dont au moins l'une est reliée à un moteur d'entraînement en rotation connecté à une unité de pilotage de l'installation. Cette unité de pilotage, connue en elle-même, n'est pas représentée sur les figures.

Un support 10 s'étend au moins en partie au-dessus du convoyeur 1. Le support 10 est ici fixe. Le support 10 porte des becs de distribution 20 s'étendant verticalement et des dispositifs de pesage généralement désignés en 30. Les becs de distribution 20 s'étendent au-dessus du convoyeur 1 à une distance de la surface supérieure de celui-ci supérieure à la somme de la hauteur d'un récipient 100 et d'une hauteur de soulèvement.

Les becs de distribution 20 ont une structure connue en elle-même et ne sont pas plus décrits ici. Ils sont reliés à un circuit d'alimentation des becs de distribution 20 en produit de remplissage.

Chaque dispositif de pesage pondéral 30 comprend, de façon connue en elle-même, un barreau déformable 31 ayant une première extrémité fixée sur un plot 32 solidaire du support 10 et une deuxième extrémité s'étendant en porte-à-faux au-dessus d'une ouverture 11 ménagée à travers le support 10. Le barreau déformable 31 est pourvu d'une jauge de contrainte, non visible sur les figures, reliée à une unité de commande reliée à des moyens d'actionnement d'un clapet du bec de distribution 20. L'unité de commande est agencée pour commander l'ouverture du clapet pour débuter la distribution de produit, et donc le remplissage d'un récipient, et la fermeture du clapet lorsque le poids de produit contenu dans le récipient 100 a atteint une valeur prédéterminée. Les moyens d'actionnement peuvent comprendre un vérin, par exemple pneumatique, ou un solénoïde d'un actionneur électromagnétique associé au clapet.

A chaque dispositif de pesage pondéral 30 est associée une colonne 40 verticale qui s'étend parallèlement au bec de distribution 20 correspondant, au voisinage de celui-ci. Chaque colonne 40 a une extrémité supérieure fixée à la deuxième extrémité du barreau déformable 31 en passant par l'ouverture 11 de sorte que la colonne 40 est suspendue à la deuxième extrémité du barreau déformable 31. La colonne 40 forme un guide vertical le long duquel un organe de saisie 50 est monté pour présenter l'embouchure d'un récipient 100 à l'aplomb du bec de distribution 20 et pour être mobile entre une position basse dans laquelle l'organe de saisie 50 peut saisir un récipient 100 reposant sur le convoyeur 1 ou déposer le récipient 100 saisi sur le convoyeur 1 et une position haute dans laquelle le récipient 100 saisi est décollé du convoyeur 1 et a son embouchure rapprochée du bec de distribution 20.

L'organe de saisie 50 est solidaire d'un premier coulisseau 41 monté pour coulisser le long de la colonne 40 entre une butée inférieure 43 fixée sur l'extrémité inférieure libre de la colonne 40 pour définir la position basse de l'organe de saisie 50 et une position correspondant à la position haute de l'organe de saisie 50. La position haute est écartée de la position basse d'une distance égale à la hauteur de soulèvement. Le premier coulisseau 41 est maintenu sur la colonne 40 et bloqué en rotation par rapport à la colonne 40 par une goupille 48 qui s'étend en saillie de la colonne 40 et qui est reçue dans une rainure allongée 49 ménagée dans le premier coulisseau 41. La rainure 49 s'étend parallèlement à la colonne 41 et a une longueur égale à la hauteur de soulèvement. Le premier coulisseau 41 est pourvu d'un ressort 47 formant un organe de rappel du premier coulisseau 41 en appui contre la butée inférieure 43.

Le premier coulisseau 41 est relié à un deuxième coulisseau 42 par des bielles 44.

L'installation comprend des moyens de commande de chaque organe de saisie 50. Les moyens de commande comprennent une genouillère 45 ayant une première extrémité articulée au deuxième coulisseau 42 et une deuxième extrémité articulée sur un point fixe 40' s'étendant entre les coulisseaux 41, 42 de telle manière que la genouillère 45 soit pliée lorsque l'organe de saisie 50 est en position basse et en extension lorsque l'organe de saisie 50 est en position haute. Lorsque la genouillère 45 est pliée, la genouillère 45 a une articulation centrale qui s'étend d'un côté d'un axe passant par les articulations de ses extrémités et, lorsque la genouillère 45 est en extension, l'articulation centrale de la genouillère 45 se trouve en butée de l'autre côté de cet axe contre une des bielles 44 verrouillant ainsi la genouillère 45. La deuxième extrémité de la genouillère 45 est prolongée par un levier 46 de manœuvre de la genouillère 45. Le levier 46 a une extrémité libre agencée pour coopérer avec un jeu vertical avec un actionneur 60 fixé sur le support 10. L'actionneur 60 est ici un actionneur électromagnétique linéaire ayant une tige 61 télescopique entre une position rentrée dans laquelle le levier 46 est levé et la genouillère 45 est pliée et une position sortie dans laquelle le levier 46 est abaissé et la genouillère 45 est en extension. L'extrémité libre de la tige télescopique 61 est pourvue d'un crochet 62 engagé autour d'un ergot 63 du levier 46 de manière à autoriser un jeu vertical de l'ergot 63 dans le crochet 62.

L'organe de saisie 50 comporte deux mâchoires 51 montées sur le premier coulisseau 41 pour être mobiles entre des positions ouverte et fermée. L'extrémité de chaque bielle 44 reliée au premier coulisseau 41 est articulée à un levier 52 d'actionnement solidaire d'une des mâchoires 51.

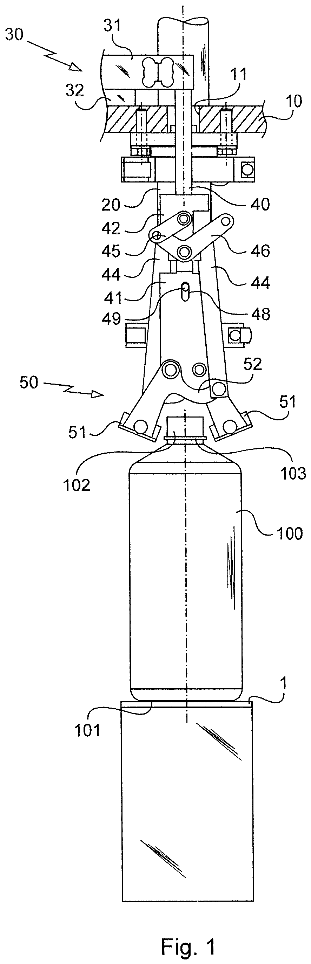

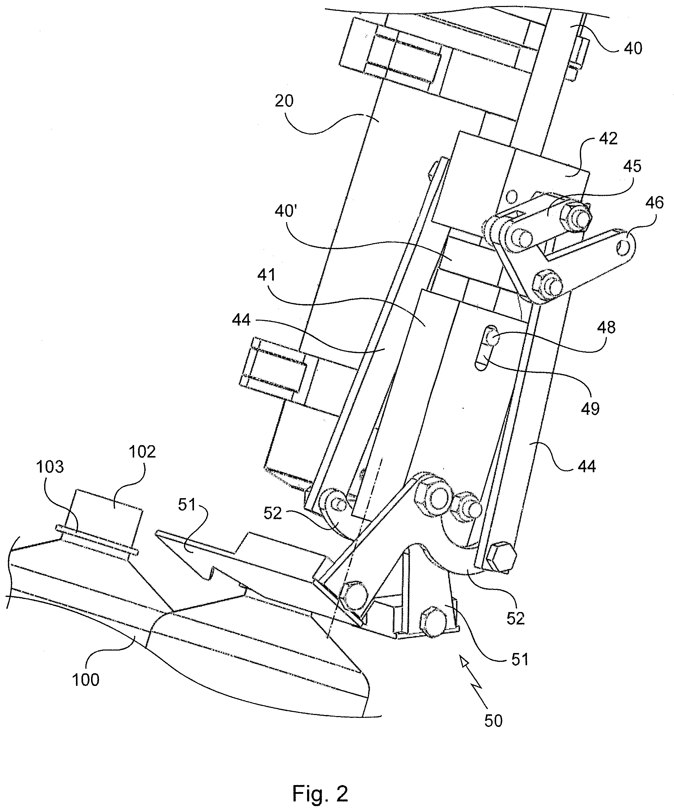

En fonctionnement, le convoyeur 1 est mis en mouvement pour amener des récipients sous le support 10. Les organes de saisie 50 ouverts sont amenés en position basse de telle manière que les mâchoires 51 s'étendent au voisinage de la collerette 103 (voir les figures 1 et 2).

La sortie de la tige télescopique 61 de l'actionneur 60 est alors commandée pour abaisser le levier 46 et déployer la genouillère 45.

Le déploiement de la genouillère provoque le déplacement du deuxième coulisseau 42 vers le haut et donc une traction sur les bielles 44 qui tirent les leviers 52 vers le haut.

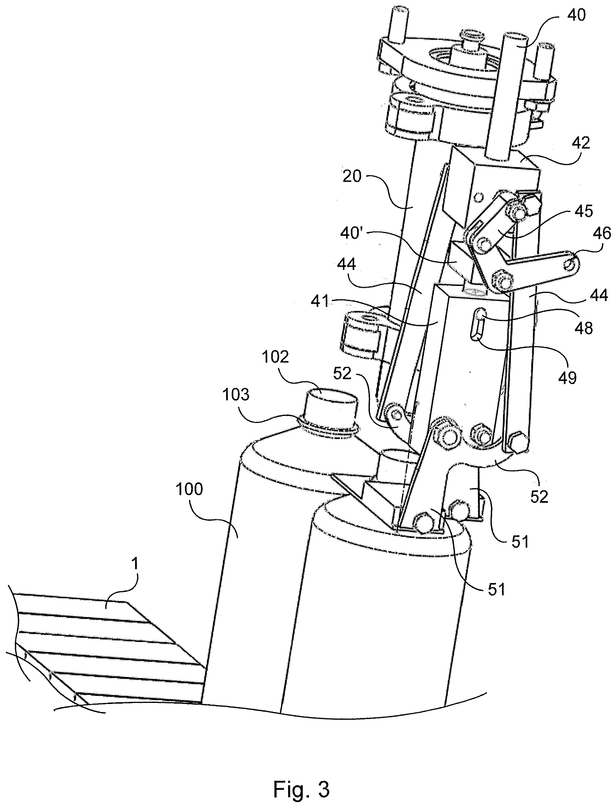

Dans une première partie de ce déplacement, le premier coulisseau reste maintenu en appui par le ressort 47 contre la butée inférieure : la traction des bielles 44 sur les leviers 52 provoque la fermeture des mâchoires 51 qui viennent se positionner sous la collerette 103 (voir la figure 3).

Dans une deuxième partie de ce déplacement du deuxième coulisseau 42, les mâchoires 52 étant en butée en position fermée contre le goulot 102, la traction des bielles 44 sur les leviers 52 provoque le déplacement du premier coulisseau 41 vers le haut à l'encontre de l'effort exercé par le ressort 47. L'organe de saisie 50 est alors amené de sa position basse vers sa position haute, soulevant ainsi le récipient 100 qui se trouve décollé du convoyeur 1 d'une hauteur égale à la hauteur de soulèvement.

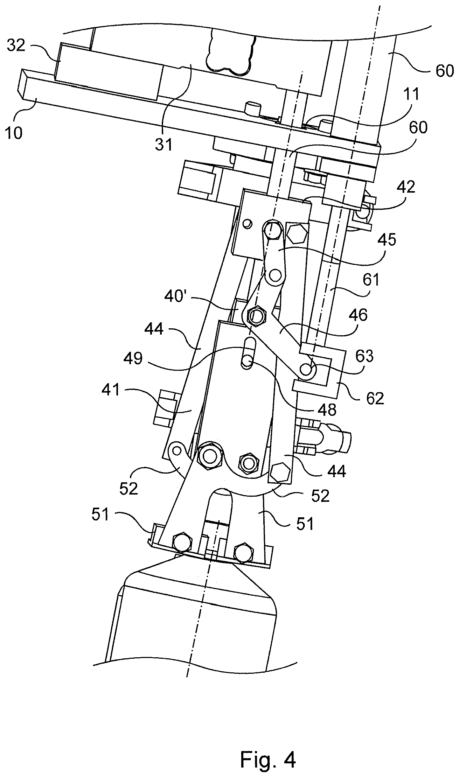

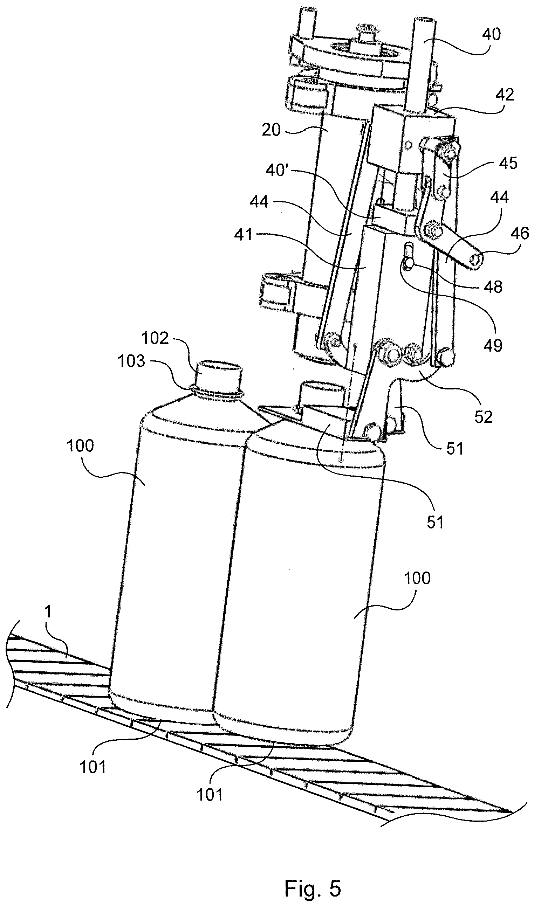

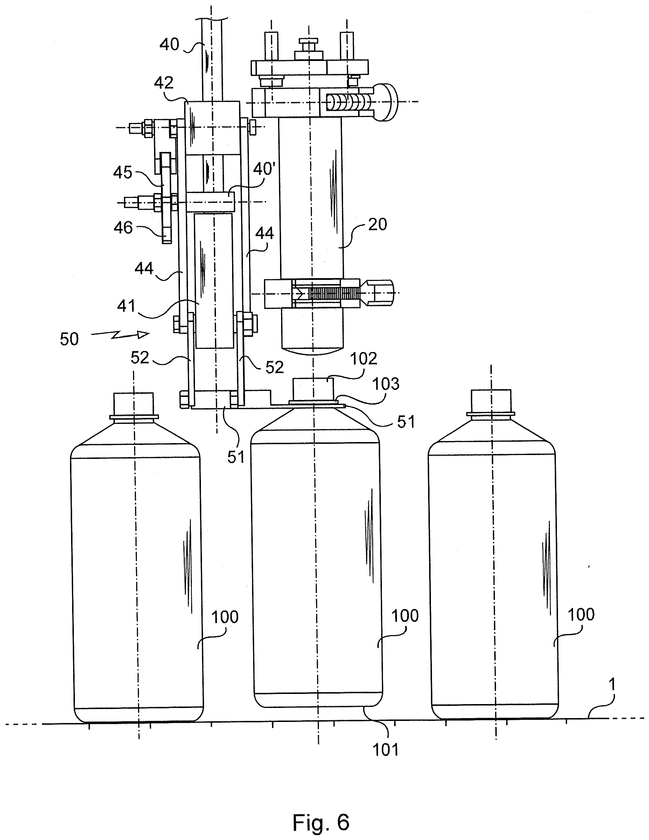

Lorsque les biellettes de la genouillère 45 sont alignées, le soulèvement maximal est atteint mais la tige télescopique 61 est sortie jusqu'à ce que l'articulation centrale de la genouillère 45 dépasse légèrement cette position d'alignement. Le ressort 47 qui continue de repousser le premier coulisseau 41 vers le bas amène alors l'articulation centrale en butée en extension et l'ergot 63 quitte alors le contact avec le crochet 62 (voir les figures 4 à 6). Il n'y a alors aucun contact parasite entre l'ensemble suspendu au barreau 31 et le reste de l'installation.

Le remplissage du récipient 100 soulevé est alors commandé et sera interrompu lorsque le poids mesuré par le dispositif de dosage 30 aura atteint la valeur souhaité.

La rétraction de la tige télescopique 61 permet de « casser » la genouillère 45 et de replier celle-ci pour ramener l'organe de saisie en position basse, reposant ainsi le récipient 100 sur le convoyeur 1, puis pour ouvrir les mâchoires 52 et libérer le récipient 100.

Le convoyeur 1 est ici arrêté pendant le remplissage qui est donc effectué par lot d'un nombre de récipients correspond au nombre de becs de distribution montés sur le support 10.

Bien entendu, l'invention n'est pas limitée aux modes de réalisation décrits mais englobe toute variante entrant dans le champ de l'invention telle que définie par les revendications.

En particulier, l'installation peut avoir une structure différente de celle décrite.

Le convoyeur peut comprendre un unique tronçon ou plusieurs tronçons mis bout-à-bout.

Le convoyeur peut également comprendre une surface de glissement sur laquelle les récipients 100 reposent par leur fond 101 et sont déplacés par exemple par une chaîne comportant des organes de poussée des récipients.

Le support 10 peut être mobile par rapport au convoyeur 1. Le support 10 peut être un transporteur agencé pour être en déplacement synchronisé avec le convoyeur 1. Ce déplacement peut être un mouvement continu en trajectoire fermée ou un mouvement alternatif et par exemple un mouvement en pas de pèlerin.

L'invention concerne également l'utilisation d'un actionneur linéaire monté sur la colonne pour déplacer l'organe de saisie entre la position basse et la position haute.

Le guide peut en variante être télescopique et former un actionneur déplaçant l'organe de saisie tout en remplaçant la colonne.

En variante, l'organe de saisie peut être agencé pour serrer le corps du récipient (et non pas le goulot de celui-ci) ou accrocher une poignée du récipient.

Les moyens de synchronisation des mouvements des mâchoires avec le déplacement de l'organe de saisie entre ses positions basse et haute peuvent être différents des biellettes 14 et des leviers 52 et comprendre par exemple des actionneurs électriques commandés de manière synchronisée par une unité de commande (comme un ASIC par exemple).

## Revendications

1. Installation de remplissage de récipients (100), comprenant un convoyeur (1) mobile linéairement sur lesquels les récipients sont destinés à reposer par leurs fonds, **caractérisée en ce que** l'installation comprend un support (10) s'étendant au moins en partie au-dessus du convoyeur, le support portant au moins un bec de distribution (20) s'étendant verticalement et un dispositif de pesage (30) auquel est suspendu un guide vertical (40) s'étendant au voisinage du bec de distribution, un organe de saisie (50) de récipient étant monté sur le support pour présenter une embouchure d'un récipient à l'aplomb du bec de distribution et pour être mobile entre une position basse dans laquelle l'organe de saisie peut saisir un récipient reposant sur le convoyeur ou déposer le récipient saisi sur le convoyeur et une position haute dans laquelle le récipient est décollé du convoyeur et a son embouchure rapprochée du bec de distribution, et des moyens de commande de l'organe de saisie.

2. Installation selon la revendication 1, dans laquelle l'organe de saisie (50) est solidaire d'un premier coulisseau (41) monté pour coulisser le long du support (40) entre une butée inférieure fixée au support pour définir la position basse de l'organe de saisie et une position correspondant à la position haute de l'organe de saisie.

3. Installation selon la revendication 2, comprenant des moyens de synchronisation des mouvements des mâchoires avec le déplacement de l'organe de saisie entre ses positions basse et haute.

4. Installation selon la revendication 3, dans laquelle le premier coulisseau (41) est relié à un deuxième coulisseau (42) par au moins une bielle (44) et les moyens de commande comprennent une genouillère (45) ayant une première extrémité articulée au deuxième coulisseau et une deuxième extrémité articulée sur un point fixe (40') s'étendant entre les coulisseaux de telle manière que la genouillère soit pliée lorsque l'organe de saisie (50) est en position basse et verrouillée lorsque l'organe de saisie est en position haute, la deuxième extrémité de la genouillère étant prolongée par un levier (46) de manœuvre de la genouillère, le levier de manœuvre ayant une extrémité libre agencée pour coopérer avec un jeu vertical avec un actionneur (60).

5. Installation selon la revendication 4, dans laquelle l'organe de saisie (50) comporte deux mâchoires (51) montées sur le deuxième coulisseau (42) pour être mobiles entre des positions ouverte et fermée, la bielle (44) ayant une extrémité articulée à au moins un des leviers d'actionnement (46) solidaires d'une des mâchoires.

6. Installation selon la revendication 2, comprenant un organe de rappel (47) du premier coulisseau (41) en appui contre la butée inférieure.

7. Installation selon la revendication 1, dans lequel le dispositif de dosage (30) comprend un barreau déformable (31) pourvu d'une jauge de contrainte, le guide vertical (40) étant suspendu à une extrémité du barreau déformable.

## Patentansprüche

1. Anlage zum Befüllen von Behältern (100), umfassend einen linear beweglichen Förderer (1), auf dem die Behälter über ihre Böden stehen sollen, **dadurch gekennzeichnet, dass** die Anlage einen Träger (10) umfasst, der sich zumindest teilweise über dem Förderer erstreckt, wobei der Träger mindestens einen sich vertikal erstreckenden Abgabestutzen (20) und eine Wiegevorrichtung (30) trägt, an der eine vertikale Führung (40) aufgehängt ist, die sich in der Nähe des Abgabestutzens erstreckt, wobei ein Greiforgan (50) zum Greifen eines Behälters an dem Träger montiert ist, um ein Mundstück eines Behälters senkrecht unter dem Abgabestutzen zu positionieren und um zwischen einer unteren Position, in der das Greiforgan einen auf dem Förderer stehenden Behälter greifen oder den ergriffenen Behälter auf dem Förderer abstellen kann, und einer oberen Position beweglich zu sein, in der der Behälter von dem Förderer abgenommen und sein Mundstück an den Abgabestutzen angenähert ist, sowie Mittel zum Steuern des Greiforgans.

2. Anlage nach Anspruch 1, bei der das Greiforgan (50) fest mit einem ersten Schieber (41) verbunden ist, der entlang des Trägers (40) zwischen einem unteren Anschlag, der an dem Träger befestigt ist, um die untere Position des Greiforgans zu definieren, und einer der oberen Position des Greiforgans entsprechenden Position verschiebbar gelagert ist.

3. Anlage nach Anspruch 2, umfassend Mittel zur Synchronisation der Bewegungen von Spannbacken mit der Verschiebung des Greiforgans zwischen seiner unteren und seiner oberen Position.

4. Anlage nach Anspruch 3, bei der der erste Schieber (41) mit einem zweiten Schieber (42) über mindestens eine Stange (44) verbunden ist und die Steuermittel einen Kniehebel (45) umfassen, der ein erstes Ende hat, das an dem zweiten Schieber angelenkt ist, sowie ein zweites Ende, das an einem ortsfesten Punkt (40') angelenkt ist, der sich zwischen den Schiebern derart erstreckt, dass der Kniehebel zusammengeklappt ist, wenn das Greiforgan (50) in der unteren Position ist, und verriegelt ist, wenn das Greiforgan in der oberen Position ist, wobei das zweite Ende des Kniehebels von einem Betätigungshebel (46) zum Betätigen des Kniehebels verlängert wird, wobei der Betätigungshebel ein freies Ende hat, das ausgebildet ist, um mit einem vertikalen Spiel mit einem Aktor (60) zusammenzuwirken.

5. Anlage nach Anspruch 4, bei der das Greiforgan (50) zwei Spannbacken (51) umfasst, die an dem zweiten Schieber (42) montiert sind, um zwischen einer offenen und einer geschlossenen Position beweglich zu sein, wobei die Stange (44) ein Ende hat, das an mindestens einem der Betätigungshebel (46) angelenkt ist, die fest mit einer der Spannbacken verbunden sind.

6. Anlage nach Anspruch 2, umfassend ein Rückstellorgan (47) zum Rückstellen des ersten Schiebers (41) in Anlage an den unteren Anschlag.

7. Anlage nach Anspruch 1, bei der die Dosiervorrichtung (30) einen verformbaren Stab (31) umfasst, der mit einem Dehnungsmessstreifen versehen ist, wobei die vertikale Führung (40) an einem Ende des verformbaren Stabes aufgehängt ist.

## Claims

1. Installation for filling containers (100), the installation comprising a linearly-movable conveyor (1) on which the containers are to stand via their bottoms, **characterized in that** the installation includes a support (10) extending at least in part over the conveyor, the support carrying at least one vertically-extending dispenser spout (20) and a weighing device (30) having suspended therefrom a vertical guide (40) extending in the vicinity of the dispenser spout, a container grasper member (50) being mounted on the support to present an opening of a container under the dispenser spout and to be movable between a low position in which the grasper member can grasp a container standing on the conveyor or can put a grasped container back onto the conveyor, and a high position in which the container is separated from the conveyor and its opening is close to the dispenser spout, and means for controlling the grasper member.

2. Installation according to claim 1, wherein the grasper member (50) is secured to a first slider (41) mounted to slide along the support (40) between a bottom abutment fastened to the free bottom end of the support in order to define the low position of the grasper member, and a position corresponding to the high position of the grasper member.

3. Installation according to claim 2, including means for synchronizing the movements of the jaws with the movement of the grasper member between its low and high positions.

4. Installation according to claim 3, wherein the first slider (41) is connected to a second slider (42) by at least one link (44) and the control means comprise a toggle (45) having a first end hinged to the second slider and a second end hinged to a stationary point (40') extending between the sliders in such a manner that the toggle is folded when the grasper member (50) is in the low position and is locked when the grasper member is in the high position, the second end of the toggle being extended by a control lever (46) for controlling the toggle, the control lever having a free end arranged to cooperate with vertical play with an actuator (60).

5. Installation according to claim 4, wherein the grasper member (50) comprises two jaws (51) mounted on the second slider (42) so as to be movable between open and closed positions, the link (44) having one end hinged to at least one of the control leavers (46) secured to one of the jaws.

6. Installation according to claim 2, including a return member (47) urging the first slider (41) to bear against the bottom abutment.

7. Installation according to claim 1, wherein the metering device (30) comprises a deformable bar (31) provided with a strain gauge, the vertical guide (40) being suspended from one end of the deformable bar.
